# EUROPEAN PATENT SPECIFICATION

(11) **EP 3 970 943 B1**
(45) Date of publication and mention of the grant of the patent: **04.06.2025**
(21) Application number: 20197185.0
(22) Date of filing: 21.09.2020
(51) Int. Cl.: B29C 45/17, B29C 45/76, B29C 45/36, B29K 105/00, B29C 45/26, B29C 33/70

(54) **MAINTAINING INJECTION MOLDING TOOLS**
INSTANDHALTUNG VON SPRITZGIESSWERKZEUGEN
ENTRETIEN D'OUTILS DE MOULAGE PAR INJECTION

(43) Date of publication of application: 23.03.2022
(73) Proprietor: Gerresheimer Regensburg GmbH, 93047 Regensburg (DE)
(72) Inventor: Hutter, Josef, 94333 Geiselhoering (DE); Lindner, Sandra, 92536 Pfreimd (DE)
(74) Representative: Fish & Richardson P.C.

(56) References cited:
- EP-A2- 2 418 068
- DE-A1- 102016 002 662
- JP-A- H07 304 068
- US-A1- 2017 291 343

## Description

### TECHNICAL FIELD

This disclosure relates to tools or dies for injection molding.

### BACKGROUND

Injection molding is a manufacturing process in which molten material is injected into a mold cavity and hardens into a product that takes the shape of the mold cavity. Injection molding is used to manufacture parts for a variety of applications. Examples of materials used injection molding are thermoplastic and thermosetting polymers, metals, glass, and elastomers. Over the lifespan of the injection mold, the surfaces of the mold cavity are subjected to wear that affects the quality of the molded parts.

Document JP H07 304068 A aims to accurately and simply attach a mold stocker and a mold replacing robot device to an injection molding machine so as to obtain dimensional precision and flatness without performing adjustment. For this purpose, an attaching bracket is placed on tie bars guiding a slide of a movable platen so as to straddle them from above and, with this mount state kept, the attaching bracket is fixed to a fixed platen to attach a mold replacing robot device and mold stockers to the upper surface of the attaching bracket through an attaching stand.

Document EP 2 418 068 A2 discloses a molding system that includes a plurality of cavity portions or core block assemblies attached to a mold plate and a plurality of core portion or core block assemblies attached to a second mold plate, and a plurality of stripper rings or thread split-slide assemblies attached to a stripper plate assembly. The stripper plate assembly includes a main stripper plate with one or more stripper plate panels coupled thereto that are translatable away from the main stripper plate during installation of at least the core portions or core block assemblies. The one or more stripper plate panels may be translatable to fold, outwardly swing, and/or slide relative to the main stripper plate to clear any core portions or core block assemblies that may have been previously installed.

### SUMMARY

A system according to the present invention is set out in claim 1. A combination according to the present invention, comprising an injection mold and the system is set out in claim 7. A method according to the present invention is set out in claim 13. Further advantageous embodiments of the present invention are set out in the dependent claims.

According to the present invention, a combination comprising an injection mold and a system according to the present invention is provided. The injection mold comprises an outer shaping surface and an inner shaping surface that cooperate to define a mold cavity; a mold body that comprises the outer shaping surface; and a moveable core that comprises the inner shaping surface, wherein the core is configured to be grasped by an automated core changing tool. Such an injection mold can be maintained automatically. For example, the core can be automatically switched out by an automated core changing tool in contrast to manual disassembly of the injection mold.

Preferably, the core comprises a clamping section configured to be grasped by the automated core changing tool and configured to engage a securing element that secures the core to the mold body. The clamping section can preferably include a groove or recess.

Preferably, the core and the mold body are configured to cooperate and center the core relative to the mold body.

Preferably, the core comprises a plurality of assembled parts.

Preferably, the core comprises a shaping section that comprises the inner shaping surface and a detachable support section that connects the body of the core to the mold body.

According to the present invention, a system for an injection mold comprises a gripper; a holder that comprises a plurality of slots, each configured to hold a mold core; and a controller configured to control the gripper in response to receiving a core change signal to disassemble a core from the injection mold, deposit the disassembled core in one of the plurality of slots of the holder, retrieve a core stored in a different one of the plurality of slots of the holder, and connect the core to the injection mold. Such a system can automatically maintain an injection mold and reduce defects in the parts molded using the injection mold. For example, the system can be configured to run automatically, without external intervention by a user.

Preferably, the controller is configured to receive the core change signal from an injection molding machine comprising the injection mold, wherein the core change signal is generated based on a number of injection cycles of the injection molding machine.

According to the present invention, the system includes a sensing device configured to sense a property of the mold core assembled in the injection mold, wherein the core change signal is generated in response to a sensor signal. The sensing device can preferably comprise one or more cameras configured to sense scratches or defects on a surface of the mold core. Preferably, the sensing device is configured to detect a presence of at least a part of the mold core based on inductance or capacitance. The sensing device can preferably comprise an optoelectronic device configured to detect a presence of at least a part of the mold core. The sensing device can preferably alternatively or additionally comprise one or more cameras configured to detect scratches or defects on a surface of one or more parts molded by the injection mold.

The present invention also combines the injection mold and the system described above.

According to the present invention, a method comprises disconnecting, using a gripper, a core from an injection mold in response to a core change signal and depositing the disconnected core; retrieving, using the gripper, a replacement core; connecting, using the gripper, the replacement core to the injection mold; and sending an enable signal to a controller of an injection molding machine that comprises the injection mold. Such a method can automatically maintain an injection mold and avoid defects in the parts molded using the injection mold.

Preferably, the method includes receiving the core change signal from the controller of the injection molding machine based on a number of molding cycles.

According to the present invention, the method includes detecting, using a sensing device, whether the core connected to the injection mold is intact and receiving the core change signal from the sensing device.

Preferably, the method includes detecting, using a sensing device, scratches or defects on the core and receiving the core change signal from the sensing device.

Preferably, the method includes molding, using the injection mold, one or more parts; detecting, using a sensing device, scratches or defects on the molded parts; and receiving the core change signal from the sensing device.

Preferably, retrieving a replacement core comprises retrieving a replacement core that has the same structure as the disconnected core.

The details of one or more implementations of the subject matter of this specification are set forth in the accompanying drawings and the subsequent description. Other features, aspects, and advantages of the subject matter will become apparent from the description, the drawings, and the claims.

### DESCRIPTION OF DRAWINGS

FIG. 1 is a schematic cross-sectional view of an implementation of an injection mold.
FIG. 2 is a schematic side view of a mold core according to an implementation.
FIG. 3 is a schematic overview of a sensor system according to an implementation.
FIG. 4 is a schematic overview of a core change system according to an implementation.
FIG. 5 is a flowchart of changing an injection mold core according to an implementation.

Like reference numbers and designations in the various drawings indicate like elements.

### DETAILED DESCRIPTION

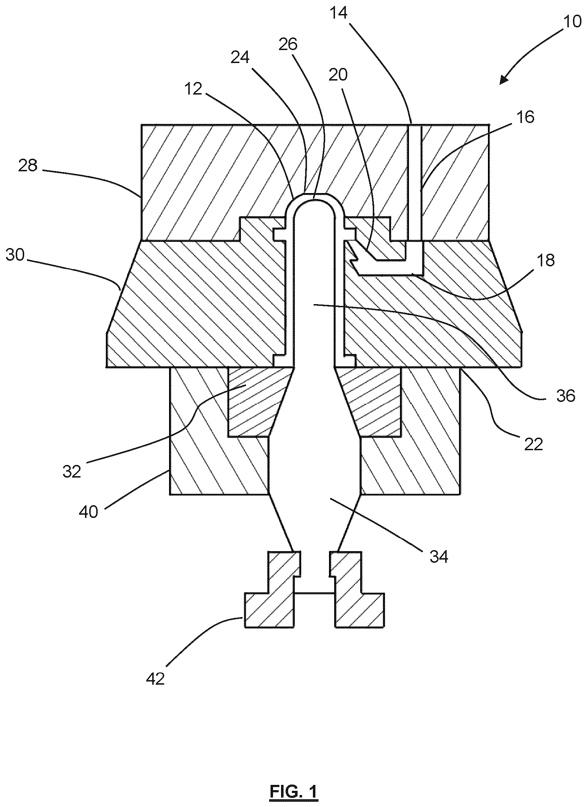

Referring to **FIG. 1****,** an injection mold 10 defines a mold cavity 12. The mold cavity 12 has the inverse shape of a molded part (not shown), meaning that the surfaces of the mold cavity 12 give the molded part its shape. Molten material for forming the part is injected at an inlet 14 that is connected to a vertical passage or sprue 16. The molten material flows down the sprue 16, through a runner 18, and into the mold cavity 12 via a gate 20. Although the implementation illustrated in FIG. 1 has one mold cavity, one gate, one runner, and one sprue, some implementations may include multiple mold cavities and a corresponding network of sprues, runners, and gates. Once the molten material has solidified inside of the mold cavity 12, actuators (not shown) open the injection mold 10 along a mold parting line 22 to retrieve the part. Although not shown in FIG. 1, the injection mold may include an ejector assembly to help remove the molded part from the mold. An ejector assembly may include one or more knockout pins attached to an ejector plate and a motor that drives the ejector plate.

The mold cavity 12 includes a pair of forming or shaping surfaces 24, 26. The molten material enters the mold cavity 12 and hardens onto the shaping surfaces 24, 26. Once the material has solidified, the bond between the hardened material and the shaping surfaces 24, 26 is broken in order to remove the molded part. This repetitive process causes the shaping surfaces 24, 26 to wear at a faster rate than the rest of the mold 10.

An outer shaping surface 24 corresponds to the outer surface of the finished part. In the illustrated example, the outer shaping surface 24 is formed by first and second cavity plates 28, 30 and a first holder plate 32 that is described in more detail below. Depending on the geometry of the mold cavity 12, a single cavity plate may be sufficient to form the outer shaping surface 24, or more than two cavity plates may be necessary to form the outer shaping surface 24. In the illustrated example, the runner 18 and gate 20 are formed in second cavity plate 30, and the sprue 16 extends along both cavity plates 28, 30. The shape and placement of the sprue 16, the runner 18, and the gate 20 depends on the mold geometry and the properties of the molten material (e.g. viscosity) and may therefore be different than illustrated in FIG. 1.

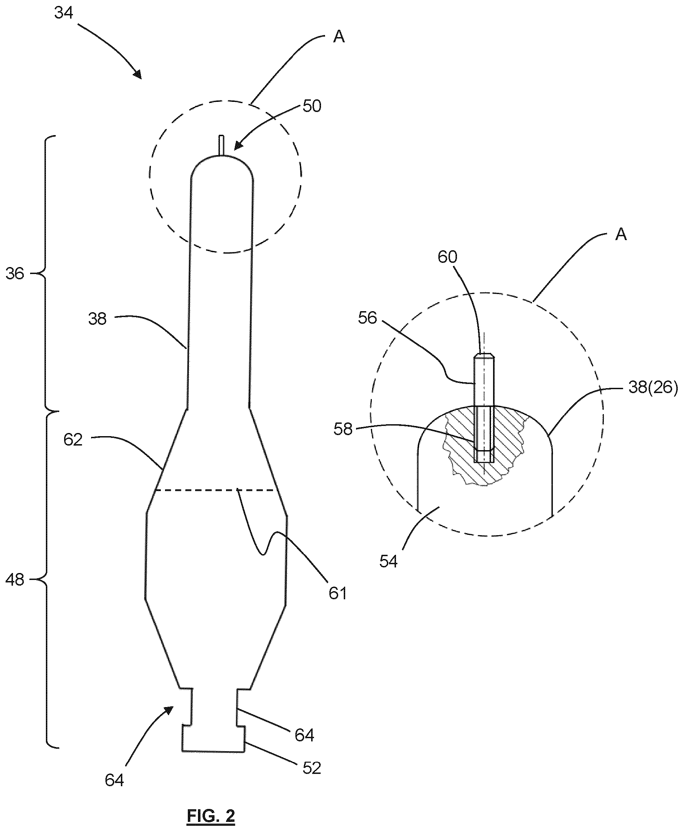

An inner shaping surface 26 corresponds to the inner surface of the finished part. In the illustrated example, the inner shaping surface 26 is formed by a core 34. More specifically, the core 34 includes a shaping section 36 (FIG. 2) that is inserted into the space or void formed by the first and second cavity plates 28, 30. In other words, an outer surface 38 of the shaping section 36 is also the inner shaping surface 26 of the mold cavity 12. The core 34 is supported by the first holder plate 32 that also forms part of the outer shaping surface 24, a second holder plate 40, and a core clamp 42. The first and second holder plates 32, 40 and the core clamp 42 are described in more detail in reference to FIG. 2.

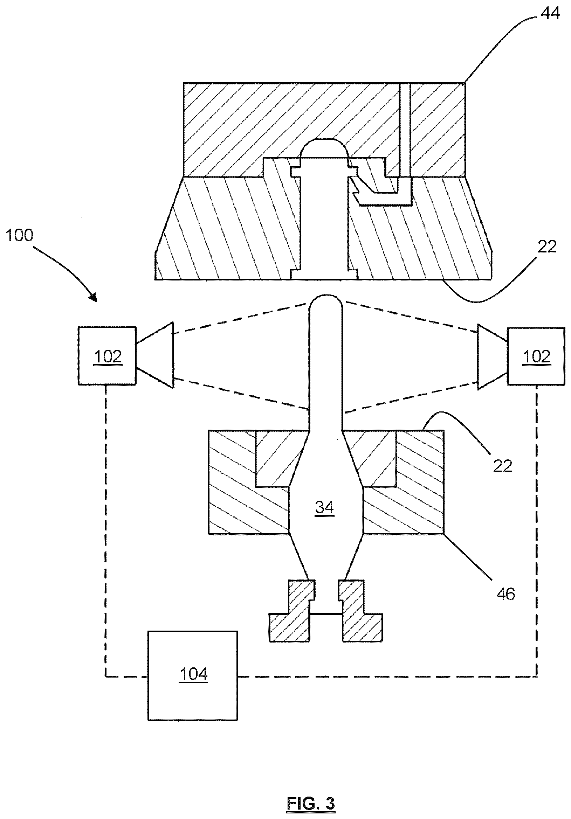

Generally speaking, the injection mold 10 thus comprises a cavity section 44 and a core section 46 that meet along mold parting line 22 (FIG. 3). Although not illustrated, the injection mold 10 may also include clamping or support plates that compress the mold parts together, an alignment mechanism that aligns the cavity section 44 and the core section 46, or both.

**FIG. 2** is an enlarged view of a core 34 that is similar to the core 34 shown in FIG. 1. The core 34 includes a shaping section 36 and a supporting section 48. The shaping section 36 extends from a first end 50 of the core 34 and is arranged in the void formed by the first and second cavity plates 28, 30 of the cavity section 44. The outer surface 38 of the shaping section 36 forms the inner shaping surface 26 of the mold cavity 12 when the core 34 is installed in the core section 46 of the injection mold 10. The supporting section 48 maintains the position of the core 34 when the core 34 is installed in the core section 46 by engaging the first and second holder plates 32, 40 and the core clamp 42. In other words, the supporting section 48 does not directly form the mold cavity 12 and does not include a shaping or forming surface. The supporting section 48 extends from a second end 52, towards the shaping section 36 and the first end 50 of the core 34.

Unlike the core 34 in FIG. 1, the core 34 in FIG. 2 has multiple assembled parts, as shown in the enlarged partial cross section X of the tip 50. More specifically, the core 34 includes a body 54 and a removable pin 56 that are connected by a threaded connection 58. In the illustrated example, the removable pin 56 may be used to mold a small hole (e.g. diameter of less than or equal to 0.2 mm) in the finished part. For example, the outer shaping surface 24 may have a small recess that mates with an end surface 60 of the pin 56. Due to its small diameter, the pin 56 is more prone to breakage than the body 54 of the core 34. By forming the pin 56 and the body 54 as separate parts, the pin 56 can be made of a harder material than the body 54 or replaced when broken. In other implementations, the shaping section 36 and supporting section 48 may be formed by separate parts, since the shaping section 36 is more susceptible to wear than the supporting section 48. A dotted line 61 schematically indicates, for example, a screwed connection between the shaping and supporting sections 36, 48. The placement of the connection line 61 may not necessarily coincide with the transition between the shaping and supporting sections 36, 48, e.g., to avoid a visible line or break in the molded part.

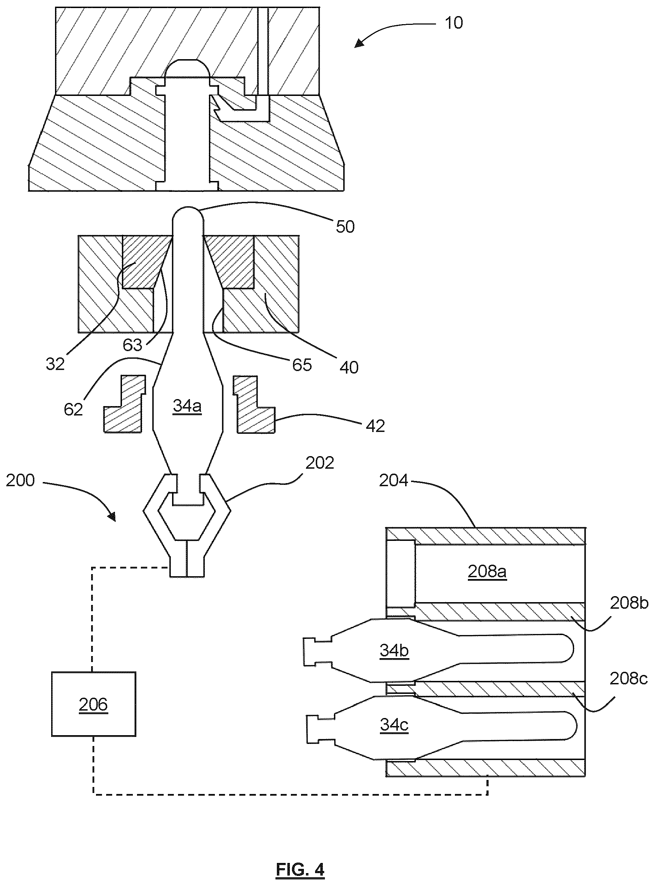

The supporting section 48 includes a centering device 62 and a clamping section 64. The centering device 62 aligns the core 34 and the first holder plate 32 when the core section 46 is assembled. In the illustrated example, the centering device 62 is a conically-shaped part of the outer surface 38 that matches a conically-shaped surface 63 in the first holder plate 32 (FIG. 4). However, the centering device 62 may also a centering pin or other similar device. Due to the conically-shaped surface that forms the centering device 62, the supporting section 48 has a larger outer diameter than the shaping section 36. However, implementations that include a different centering device 62 (e.g. a centering pin) may include a core 34 that has a substantially constant outer diameter along its entire length. In such implementations, the core section 46 may include a single core plate with a cylindrical bore or passage that receives the core 34.

The clamping section 64 is located adjacent the second end 52 and engages the core clamp 42 shown in FIG. 1. In the illustrated example, the clamping section 64 includes a peripherally extending groove 66 that receives a pair of jaws of the core clamp 42. However, there are other ways to releasably connect the clamping section 64 and the core clamp 42. For example, the core 34 may include a pull stud bolt that is threaded into a hole in the body 54, similarly to the pull stud bolts used to connect milling cutters to CNC machines. In such implementations, the core clamp 42 may include a collet or a ball-type device to engage the enlarged head of the pull stud bolt.

Referring now to **FIG. 3****,** an injection mold 10 similar to the example illustrated in FIG. 1 is shown in an open state. In other words, the cavity section 44 and the core section 46 are separated along the mold parting line 22 to expose the inner shaping surface 26, i.e. the surface 38 of the shaping section 36 of the core 34. As described above, the repetitive process of removing molded parts from the core 34 may cause scratches on the surface 38 that diminish the quality of the molded parts. The core 34 may also become cracked, or an additional part, such as the pin 56 (not shown), may break or be missing. In order to minimize such potential defects, a sensor system 100 is illustrated. The sensor system 100 includes one or more sensing devices 102 that are communicatively coupled to a controller 104.

In the illustrated example, the sensing devices 102 are cameras trained on the outer surface 38 of the shaping section 36 of the core 34. The cameras are configured to send image data to the controller 104, and the controller 104 uses software to determine the presence of scratches, cracks, or missing parts. Although the illustrated cameras are focused on the core 34, in some implementations, the cameras of the sensing system may be used to screen the molded parts for defects resulting from scratches, cracks, or missing parts. In implementations including a camera, the camera may capture one or more images after every injection molding cycle. If the mold or molded parts passes the quality test (e.g. no scratches are detected), the controller 104 may determine that the core 34 is fit for use.

Instead of cameras, other types of devices may form the sensing devices of the sensor system 100. For example, the sensor system 100 may include a photoelectric sensor that senses the presence of a part such as the pin 56. For example, a through-beam photoelectric sensor may be arranged so that the pin 56 is located within the line-of-sight of the receiver, blocking the light beam from reaching the receiver. When the pin 56 is broken or missing, the beam of light may extend from the transmitter to the receiver, sending a signal to the controller 104.

In some implementations, the sensing devices 102 may include proximity sensors. The proximity sensors may be optical proximity sensors that detect the presence or absence of the pin 56. The proximity sensors may also use inductance or capacitance to detect the presence or absence of the pin 56, based on the material of the pin (e.g. metal).

The sensor system 100 may also include a combination of different sensing devices. For example, a camera may be used to check for scratches, while an induction or capacitive proximity sensor detects the presence of the pin 56.

When the sensor system 100 detects a defect in the core 34, the core 34 can be switched before defects occur in the molded parts. Referring to **FIG. 4****,** an automated core changer system 200 includes a mover 202, a rack 204, and a controller 206. In FIG. 4, the mover 202 is schematically illustrated as a pair of jaws that grip the clamping section 64 of the core 34, for example, the peripheral groove 66. When the injection mold 10 is in its open state, the controller 206 may send signal to the mover 202 to begin the core change operation. Although the controller 206 is illustrated separately from the controller 104 of the sensor system 100, they may also be one and the same, i.e. the sensor system 100 is optionally incorporated into the core changer system 200. The controller 206 may be a standalone device that is separate from the control system (not shown) for the injection molding machine, making it possible to retrofit the core changer system 200 to an existing injection molding machine. However, it is also conceivable that the injection molding machine's control system also implements the control operations for the core changer system 200, the sensor system 100, or both.

The controller 206 may then control the mover 202 to engage the clamping section 64 of the core 34 installed in the core section 46 of the injection mold 10. The mover 202 then loosens the installed core 34 by an appropriate movement, e.g., gently twisting or pulling the core away from the core section 46.

After initially loosening the core 34 to avoid damage to the core section 46, the mover 202 moves the used core to the rack 204. In the illustrated example, the rack 204 has a plurality of slots 208a-208c that each hold a core 34a-34c. Although the cores 34a-34c are shown to be identical, the rack 204 may hold differently shaped cores, and the core changer system 200 is used to automatically change the cores and thus the shape of the mold cavities.

After depositing the used core in an appropriate slot 208, the mover 202 then moves to a different slot 208 to retrieve an undamaged core 34. For this purpose, the controller 206 may be communicatively coupled to the rack 204. Alternatively, the mover 202 may communicate the positions of the damaged and undamaged cores to the controller 206 without the rack 204 being communicatively coupled to the controller 206.

The mover 202 guides the tip 50 of the core through a passage formed by the conical surface 63 in the first holder plate 32 and a cylindrical opening 65 in the second holder plate 40. Once the conical centering surface 62 of the core 34 and the surface 63 of the first holder plate 32 engage, the core 34 and the first holder plate 32 are centered. At this point, the jaws of the mover 202 may release the core's clamping section 64, and the core clamp 42 engages the clamping section 64 to keep the core 34 in place. As described, the mover 202 forms an automated core changing tool.

Once the core clamp 42 engages the core's clamping section 64, the controller 206 may send a signal to a controller of an injection molding machine (not shown) that the injection mold 10 is ready for use.

Although the core changer system 200 is described in relation to the core design illustrated on the implementations of FIG. 1 to 3, the core changer system 200 can be used with any type of core that has a clamping section that can be gripped by the mover 202. For example, the mover 202 may include a magnet or vacuum suction device that engages the clamping section of a core. Furthermore, although the mover 202 and the core clamp 42 are illustrated as separate parts in FIG. 4, in some implementations, the core clamp 42 may also form the mover 202 for the core changer system 200.

The described core changer system may automatically switch the core in an injection mold and automatically render it fit for use. In some implementations, the core may be switched after a predetermined number of injection mold cycles. For example, the controller of an injection molding machine may send a signal (e.g. a core change signal) to the controller 206 to instigate the core switching process. In some implementations, the core may be switched in response to a signal provided by the controller 104 of the sensor system 100. In both implementations, the core switching process may minimize defects in subsequent molded parts by providing a new and intact core in the injection mold.

In some implementations, the core switching process may be instigated based on the number of production cycles and in response to input from the sensor system. Some implementations may be configured to generally instigate the core switching process after a particular number of molding cycles. Once the pre-determined number of cycles has been reached, sensor input may be used to determine whether to trigger a core change. For example, if a camera continues to capture image data of a scratch-free or intact core, the system may be configured to postpone the core switching process.

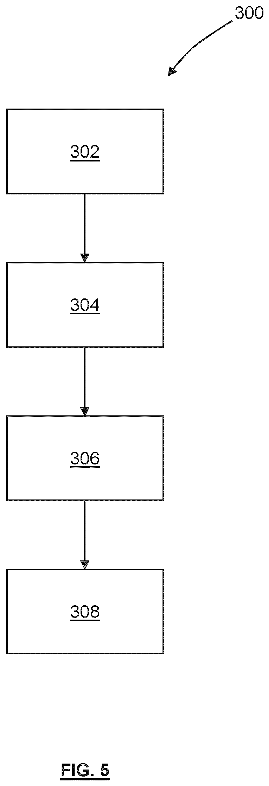

Referring to **FIG. 5****,** a schematic overview of a method 300 of automatically changing an injection mold core in an injection molding machine is shown. At 302, a core is disconnected from an injection mold using a gripper in response to a core change signal and depositing the disconnected core. At 304, a replacement core is retrieved, also using the gripper. For example, the replacement core may have the same structure as the core that was disconnected from the injection mold. At 306, the gripper is used to connect the replacement core to the injection mold. At 308, an enable signal is sent to a controller of the injection molding machine. The enable signal communicates to the controller of the injection molding machine that the mold core has been replaced and the injection molding process can restart. By automatically changing one of the parts of the injection mold that is most susceptible to wear, the method may reduce the overall downtime of the injection mold and improve the efficiency of the molding process.

According to different implementations, the core change signal may originate from different sources. For example, the core change signal may be received from the controller of the injection molding machine based on a number of molding cycles. Some implementations of the method use a sensing device to detect whether the core connected to the injection mold is intact (e.g. whether part of the core is missing), and the core change signal is based on this detection. In some implementations, a different sensing device may be used to detect scratches, dents, or cracks, and the core change signal is based on the detection of the core's scratches, dents, or cracks. Similarly, a sensing device may be used to quality test for scratches or defects on the parts molded by the injection mold, and the core change signal may be based on this quality control of the molded parts.

In some implementations, the method may include multiple forms of quality control that are performed after every molding cycle, and the core change signal may be obtained based on the combined input of the multiple sensing devices. For example, a first sensing device may sense an irregularity on a part of a mold core, and a second sensing device may show that the irregularity does not have an impact on the molded parts. In such a case, the input of the second sensing device may be used to override the first sensing device to avoid a premature core switching operation. In other cases, one input may override the other input and instigate a core changing operation. For example, the number of injection molding cycles may be below a predetermined threshold that triggers a core change signal, but input from a sensing device that detects a defect on the molded part may nonetheless trigger the core change signal.

Although the illustrated implementations show a single mold cavity and a single mold core, the general concept may be implemented for an injection mold that includes multiple mold cavities and multiple cores that are changed as described above.

The invention is defined in the appended set of claims.

## Claims

1. A system (200) for an injection mold (10) comprising:
a gripper (202);
a holder (204) that comprises a plurality of slots (208a-208c), each configured to hold a mold core (34, 34a-c);
a controller (206) configured to control the gripper (202) in response to receiving a core change signal to
disassemble a core (34a) from the injection mold (10),
deposit the disassembled core (34a) in one of the plurality of slots (208a-208c) of the holder (204),
retrieve a core (34b, 34c) stored in a different one of the plurality of slots (208a-208c) of the holder (204), and
connect the core (34b, 34c) to the injection mold (10), **characterized in**
a sensing device (102) configured to sense a property of the mold core (34, 34a-c) assembled in the injection mold (10), wherein the core change signal is generated in response to a sensor signal.

2. The system (200) of claim 1, wherein the controller (206) is configured to receive the core change signal from an injection molding machine comprising the injection mold (10), wherein the core change signal is generated based on a number of injection cycles of the injection molding machine.

3. The system (200) of claim 1, wherein the sensing device (102) comprises one or more cameras configured to sense scratches or defects on a surface of the mold core (34, 34a-c).

4. The system (200) of claim 1, wherein the sensing device (102) is configured to detect a presence of at least a part of the mold core (34, 34a-c) based on inductance or capacitance.

5. The system (200) of claim 1, wherein the sensing device (102) comprises an optoelectronic device configured to detect a presence of at least a part of the mold core (34, 34a-c).

6. The system (200) of any of claims 1 and 3 to 5, wherein the sensing device (102) comprises one or more cameras configured to detect scratches or defects on a surface of one or more parts molded by the injection mold (10).

7. A combination comprising the injection mold (10) and the system (200) according to any of claims 1 to 6, wherein the injection mold (10) comprises:
an outer shaping surface (24) and an inner shaping surface (26) that cooperate to define a mold cavity (12);
a mold body that comprises the outer shaping surface (24); and
a moveable core (34, 34a-c) that comprises the inner shaping surface (26), wherein the core (34, 34a-c) is configured to be grasped by an automated core changing tool.

8. The combination of claim 7, wherein the core (34, 34a-c) comprises a clamping section (64) configured to be grasped by the automated core changing tool and configured to engage a securing element that secures the core (34) to the mold body.

9. The combination of claim 8, wherein the clamping section (64) comprises a groove (66) or recess.

10. The combination of any of claims 7 to 9, wherein the core (34, 34a-c) and the mold body are configured to cooperate and center the core (34, 34a-c) relative to the mold body.

11. The combination of any of claims 7 to 10, wherein the core (34, 34a-c) comprises a plurality of assembled parts.

12. The combination of claim 11 , wherein the core (34, 34a-c) comprises a shaping section (36) that comprises the inner shaping surface (26) and a detachable support section (48) that connects the body (54) of the core (34, 34a-c) to the mold body.

13. A method (300) comprising:
disconnecting, using a gripper, a core (34a) from an injection mold (10) in response to a core change signal and depositing the disconnected core (34a);
retrieving, using the gripper, a replacement core (34b, 34c);
connecting, using the gripper, the replacement core (34b, 34c) to the injection mold (10);
sending an enable signal to a controller (104, 206) of an injection molding machine that comprises the injection mold (10); **characterized in**
detecting, using a sensing device (102), whether the core (34, 34a-c) connected to the injection mold (10) is intact; and
receiving the core change signal from the sensing device (102).

14. The method of claim 13, further comprising receiving the core change signal from the controller (104, 206) of the injection molding machine based on a number of molding cycles.

15. The method of claim 13 or 14, further comprising
detecting, using a sensing device (102), scratches or defects on the core (34, 34a-c) and
receiving the core change signal from the sensing device (102).

16. The method of any of claims 13 to 15, further comprising
molding, using the injection mold (10), one or more parts;
detecting, using a sensing device, scratches or defects on the molded parts; and
receiving the core change signal from the sensing device.

17. The method of any of claims 13 to 15, wherein retrieving a replacement core (34, 34a-c) comprises retrieving a replacement core (34, 34a-c) that has the same structure as the disconnected core (34, 34a-c).

## Patentansprüche

1. System (200) für eine Spritzgießform (10), umfassend:
einen Greifer (202);
einen Halter (204), der eine Vielzahl von Schlitzen (208a-208c) umfasst, die jeweils dazu ausgelegt sind, einen Formkern (34, 34a-c) zu halten;
eine Steuerung (206), die dazu ausgelegt ist, den Greifer (202) in Reaktion auf das Empfangen eines Kernwechselsignals zu steuern, zum
Demontieren eines Kerns (34a) aus der Spritzgießform (10),
Ablegen des demontierten Kerns (34a) in einem der Vielzahl von Schlitzen (208a-208c) des Halters (204),
Holen eines Kerns (34b, 34c), der in einem anderen der Vielzahl von Schlitzen (208a-208c) des Halters (204) verwahrt ist, und
Verbinden des Kerns (34b, 34c) mit der Spritzgießform (10), **gekennzeichnet durch**
eine Abfühlvorrichtung (102), die dazu ausgelegt ist, eine Eigenschaft des in der Spritzgießform (10) montierten Formkerns (34, 34a-c) abzufühlen, wobei das Kernwechselsignal in Reaktion auf ein Sensorsignal generiert wird.

2. System (200) nach Anspruch 1, wobei die Steuerung (206) dazu ausgelegt ist, das Kernwechselsignal von einer Spritzgießmaschine, die die Spritzgießform (10) umfasst, zu empfangen, wobei das Kernwechselsignal basierend auf einer Anzahl von Spritzzyklen der Spritzgießmaschine generiert wird.

3. System (200) nach Anspruch 1, wobei die Abfühlvorrichtung (102) eine oder mehrere Kameras umfasst, die dazu ausgelegt sind, Kratzer oder Defekte auf einer Oberfläche des Formkerns (34, 34a-c) abzufühlen.

4. System (200) nach Anspruch 1, wobei die Abfühlvorrichtung (102) dazu ausgelegt ist, eine Anwesenheit mindestens eines Teils des Formkerns (34, 34a-c) basierend auf Induktivität oder Kapazität zu detektieren.

5. System (200) nach Anspruch 1, wobei die Abfühlvorrichtung (102) eine optoelektronische Vorrichtung umfasst, die dazu ausgelegt ist, eine Anwesenheit mindestens eines Teils des Formkerns (34, 34a-c) zu detektieren.

6. System (200) nach einem der Ansprüche 1 und 3 bis 5, wobei die Abfühlvorrichtung (102) eine oder mehrere Kameras umfasst, die dazu ausgelegt sind, Kratzer oder Defekte auf einer Oberfläche eines oder mehrerer Teile, die durch die Spritzgießform (10) geformt werden, zu detektieren.

7. Kombination, umfassend die Spritzgießform (10) und das System (200) nach einem der Ansprüche 1 bis 6, wobei die Spritzgießform (10) umfasst:
eine äußere Formgebungsoberfläche (24) und eine innere Formgebungsoberfläche (26), die zusammenwirken, um einen Formhohlraum (12) zu definieren;
einen Formkörper, der die äußere Formgebungsoberfläche (24) umfasst; und
einen beweglichen Kern (34, 34a-c), der die innere Formgebungsoberfläche (26) umfasst, wobei der Kern (34, 34a-c) dazu ausgelegt ist, von einem automatisierten Kernwechselwerkzeug gegriffen zu werden.

8. Kombination nach Anspruch 7, wobei der Kern (34, 34a-c) einen Klemmabschnitt (64) umfasst, der dazu ausgelegt ist, von dem automatisierten Kernwechselwerkzeug gegriffen zu werden, und dazu ausgelegt ist, in Eingriff mit einem Sicherungselement zu kommen, das den Kern (34) an dem Formkörper sichert.

9. Kombination nach Anspruch 8, wobei der Klemmabschnitt (64) eine Nut (66) oder Aussparung umfasst.

10. Kombination nach einem der Ansprüche 7 bis 9, wobei der Kern (34, 34a-c) und der Formkörper dazu ausgelegt sind, zusammenzuwirken und den Kern (34, 34a-c) relativ zu dem Formkörper zu zentrieren.

11. Kombination nach einem der Ansprüche 7 bis 10, wobei der Kern (34, 34a-c) eine Vielzahl montierter Teile umfasst.

12. Kombination nach Anspruch 11, wobei der Kern (34, 34a-c) einen Formgebungsabschnitt (36), der die innere Formgebungsoberfläche (26) umfasst, und einen abnehmbaren Stützabschnitt (48) umfasst, der den Körper (54) des Kerns (34, 34a-c) mit dem Formkörper verbindet.

13. Verfahren (300), umfassend:
Trennen eines Kerns (34a) von einer Spritzgießform (10) unter Verwendung eines Greifers in Reaktion auf ein Kernwechselsignal, und Ablegen des getrennten Kerns (34a);
Holen eines Ersatzkerns (34b, 34c) unter Verwendung des Greifers;
Verbinden des Ersatzkerns (34b, 34c) mit der Spritzgießform (10) unter Verwendung des Greifers;
Senden eines Freigabesignals an eine Steuerung (104, 206) einer Spritzgießmaschine, die die Spritzgießform (10) umfasst; **gekennzeichnet durch**
Detektieren, ob der Kern (34, 34a-c), der mit der Spritzgießform (10) verbunden ist, intakt ist, unter Verwendung einer Abfühlvorrichtung (102); und
Empfangen des Kernwechselsignals von der Abfühlvorrichtung (102).

14. Verfahren nach Anspruch 13, ferner umfassend Empfangen des Kernwechselsignals von der Steuerung (104, 206) der Spritzgießmaschine basierend auf einer Anzahl von Gießzyklen.

15. Verfahren nach Anspruch 13 oder 14, ferner umfassend:
Detektieren von Kratzern oder Defekten auf dem Kern (34, 34a-c) unter Verwendung einer Abfühlvorrichtung (102), und
Empfangen des Kernwechselsignals von der Abfühlvorrichtung (102).

16. Verfahren nach einem der Ansprüche 13 bis 15, ferner umfassend:
Formen eines oder mehrerer Teile unter Verwendung der Spritzgießform (10);
Detektieren von Kratzern oder Defekten an den Formteilen unter Verwendung einer Sensorvorrichtung; und
Empfangen des Kernwechselsignals von der Abfühlvorrichtung.

17. Verfahren nach einem der Ansprüche 13 bis 15, wobei Holen eines Ersatzkerns (34, 34a-c) Holen eines Ersatzkerns (34, 34a-c) umfasst, der die gleiche Struktur wie der getrennte Kern (34, 34a-c) aufweist.

## Revendications

1. Système (200) destiné à un moule d'injection (10) comprenant :
un organe de préhension (202) ;
un support (204) qui comprend une pluralité de fentes (208a à 208c), chacune conçue pour tenir un noyau de moule (34, 34a à c) ;
un dispositif (206) configuré pour commander l'organe de préhension (202) en réponse à la réception d'un signal de changement de noyau pour
désassembler un noyau (34a) du moule d'injection (10), déposer le noyau (34a) désassemblé dans une fente de la pluralité de fentes (208a à 208c) du support (204),
récupérer un noyau (34b, 34c) stocké dans une fente différente de la pluralité de fentes (208a à 208c) du support (204), et
relier le noyau (34b, 34c) au moule d'injection (10), **caractérisé par**
un dispositif de détection (102) configuré pour détecter une propriété du noyau de moule (34, 34a à c) assemblé dans le moule d'injection (10), dans lequel le signal de changement de noyau est généré en réponse à un signal de capteur.

2. Système (200) selon la revendication 1, dans lequel le dispositif de commande (206) est configuré pour recevoir le signal de changement de noyau provenant d'une machine de moulage par injection comprenant le moule d'injection (10), dans lequel le signal de changement de noyau est généré sur la base d'un nombre de cycles d'injection de la machine de moulage par injection.

3. Système (200) selon la revendication 1, dans lequel le dispositif de détection (102) comprend un ou plusieurs appareils de prise de vues configurés pour détecter des rayures ou des défauts sur une surface du noyau de moule (34, 34a à c).

4. Système (200) selon la revendication 1, dans lequel le dispositif de détection (102) est configuré pour détecter la présence d'au moins une partie du noyau de moule (34, 34a à c) sur la base d'une inductance ou d'une capacité.

5. Système (200) selon la revendication 1, dans lequel le dispositif de détection (102) comprend un dispositif optoélectronique configuré pour détecter la présence d'au moins une partie du noyau de moule (34, 34a à c).

6. Système (200) selon l'une quelconque des revendications 1 et 3 à 5, dans lequel le dispositif de détection (102) comprend un ou plusieurs appareils de prise de vues configurés pour détecter des rayures ou des défauts sur une surface d'une ou plusieurs pièces moulées par le moule d'injection (10).

7. Combinaison comprenant le moule d'injection (10) et le système (200) selon l'une quelconque des revendications 1 à 6, dans laquelle le moule d'injection (10) comprend :
une surface de façonnage externe (24) et une surface de façonnage interne (26) qui coopèrent pour délimiter une cavité de moule (12) ;
un corps de moule qui comprend la surface de façonnage externe (24) ; et
un noyau mobile (34, 34a à c) qui comprend la surface de façonnage interne (26), le noyau (34, 34a à c) étant conçu pour être saisi par un outil de changement de noyau automatisé.

8. Combinaison selon la revendication 7, dans laquelle le noyau (34, 34a à c) comprend une section de serrage (64) conçue pour être saisie par l'outil de changement de noyau automatisé et conçue pour entrer en prise avec un élément de fixation qui fixe le noyau (34) au corps de moule.

9. Combinaison selon la revendication 8, dans laquelle la section de serrage (64) comprend une rainure (66) ou un évidement.

10. Combinaison selon l'une quelconque des revendications 7 à 9, dans laquelle le noyau (34, 34a à c) et le corps de moule sont conçus pour coopérer et centrer le noyau (34, 34a à c) par rapport au corps de moule.

11. Combinaison selon l'une quelconque des revendications 7 à 10, dans laquelle le noyau (34, 34a à c) comprend une pluralité de parties assemblées.

12. Combinaison selon la revendication 11, dans laquelle le noyau (34, 34a à c) comprend une section de façonnage (36) qui comprend la surface de façonnage interne (26) et une section de support détachable (48) qui relie le corps (54) du noyau (34, 34a à c) au corps de moule.

13. Procédé (300) comprenant :
le détachement, à l'aide d'un organe de préhension, d'un noyau (34a) à partir d'un moule d'injection (10) en réponse à un signal de changement de noyau et le dépôt du noyau (34a) détaché ;
la récupération, à l'aide de l'organe de préhension, d'un noyau de remplacement (34b, 34c) ;
la liaison, à l'aide de l'organe de préhension, du noyau de remplacement (34b, 34c) au moule d'injection (10) ;
l'envoi d'un signal d'activation à un dispositif de commande (104, 206) d'une machine de moulage par injection qui comprend le moule d'injection (10) ; **caractérisé par**
la détection, à l'aide d'un dispositif de détection (102), établissant si le noyau (34, 34a à c) relié au moule d'injection (10) est intact ; et
la réception du signal de changement de noyau provenant du dispositif de détection (102).

14. Procédé selon la revendication 13, comprenant en outre la réception du signal de changement de noyau provenant du dispositif de commande (104, 206) de la machine de moulage par injection sur la base d'un nombre de cycles de moulage.

15. Procédé selon la revendication 13 ou 14, comprenant en outre
la détection, à l'aide d'un dispositif de détection (102), de rayures ou défauts sur le noyau (34, 34a à c) et
la réception du signal de changement de noyau provenant du dispositif de détection (102).

16. Procédé selon l'une quelconque des revendications 13 à 15, comprenant en outre
le moulage, à l'aide du moule d'injection (10), d'une ou plusieurs pièces ;
la détection, à l'aide d'un dispositif de détection, de rayures ou défauts sur les pièces moulées ; et
la réception du signal de changement de noyau provenant du dispositif de détection.

17. Procédé selon l'une quelconque des revendications 13 à 15, dans lequel la récupération d'un noyau de remplacement (34, 34a à c) comprend la récupération d'un noyau de remplacement (34, 34a à c) qui a la même structure que le noyau (34, 34a à c) désassemblé.
